(19) Europäisches Patentamt / European Patent Office / Office européen des brevets

(11) **EP 2 960 806 B1**

(12) **EUROPEAN PATENT SPECIFICATION**

(45) Date of publication and mention
of the grant of the patent:
**03.09.2025 Bulletin 2025/36**

(21) Application number: **15174139.4**

(22) Date of filing: **26.06.2015**

(51) International Patent Classification (IPC):
**G06F 17/18** (2006.01) **G07C 5/00** (2006.01)

(52) Cooperative Patent Classification (CPC):
**G06F 17/18; G07C 5/0808**

(54) **DETECTING AN EVENT FROM TIME-SERIES DATA SEQUENCES**

ERKENNUNG EINES EREIGNISSES AUS ZEITREIHENDATENSEQUENZEN

DÉTECTION D'UN ÉVÉNEMENT À PARTIR DE SÉQUENCES DE DONNÉES EN SÉRIE TEMPORELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2014 IN 2074MU2014**

(43) Date of publication of application:
**30.12.2015 Bulletin 2015/53**

(73) Proprietor: **Tata Consultancy Services Limited Maharashtra (IN)**

(72) Inventors:
• **Hassan,, Ehtesham**
**122003 Haryana (IN)**
• **Agarwal, Puneet**
**201301 Uttar Pradesh (IN)**
• **Shroff, Gautam**
**122003 Haryana (IN)**

(74) Representative: **Potter Clarkson**
**Chapel Quarter**
**Mount Street**
**Nottingham NG1 6HQ (GB)**

(56) References cited:
**US-A1- 2014 111 647**

• L. S. RIBEIRO: "Object recognition for semantic robot vision", MASTER'S THESIS, 1 January 2008 (2008-01-01), Universidade de Aveiro, pages 1 - 64, XP055222899, Retrieved from the Internet <URL:http://ria.ua.pt/bitstream/10773/2057/1/2009001002.pdf> [retrieved on 20151022]

• "EPIA 2009", 12 October 2009, PROGRESS IN ARTIFICIAL INTELLIGENCE, SPRINGER BERLIN HEIDELBERG, BERLIN, HEIDELBERG, ISBN: 978-3-642-04685-8, article RUI PEREIRA ET AL: "Learning Visual Object Categories with Global Descriptors and Local Features", pages: 225 - 236, XP019131992

• KUMAR ROY: "'Leaming Words from Sights and Sounds: A Computational Model", 1 September 1999 (1999-09-01), XP055140284, Retrieved from the Internet <URL:http://web.media.mit.edu/~dkroy/papers/pdf/phd_thesis_1999.pdf> [retrieved on 20140915]

• EHTESHAM HASSAN ET AL: "Multi-sensor event detection using shape histograms", DATA SCIENCES, 16 August 2014 (2014-08-16), 2 Penn Plaza, Suite 701 New York NY 10121-0701 USA, pages 1 - 14, XP055221659, ISBN: 978-1-4503-3436-5, Retrieved from the Internet <URL:http://arxiv.org/pdf/1408.3733.pdf> [retrieved on 20151016]

• EHTESHAM HASSAN ET AL: "Multi-sensor event detection using shape histograms", DATA SCIENCES, ACM, 2 PENN PLAZA, SUITE 701 NEW YORK NY 10121-0701 USA, 18 March 2015 (2015-03-18), pages 20 - 29, XP058068963, ISBN: 978-1-4503-3436-5, DOI: 10.1145/2732587.2732591

• JASON LINES ET AL: "A shapelet transform for time series classification", KNOWLEDGE DISCOVERY AND DATA MINING, ACM, 2 PENN PLAZA, SUITE 701 NEW YORK NY 10121-0701 USA, 12 August 2012 (2012-08-12), pages 289 - 297, XP058007713, ISBN: 978-1-4503-1462-6, DOI: 10.1145/2339530.2339579

- NAVIN MADICAR ET AL: "Parameter-free subsequences time series clustering with various-width clusters", KNOWLEDGE AND SMART TECHNOLOGY (KST), 2013 5TH INTERNATIONAL CONFERENCE ON, IEEE, 31 January 2013 (2013-01-31), pages 150 - 155, XP032395666, ISBN: 978-1-4673-4850-8, DOI: 10.1109/KST.2013.6512805

- THANAWIN RAKTHANMANON ET AL: "Time Series Epenthesis: Clustering Time Series Streams Requires Ignoring Some Data", DATA MINING (ICDM), 2011 IEEE 11TH INTERNATIONAL CONFERENCE ON, IEEE, 11 December 2011 (2011-12-11), pages 547 - 556, XP032099885, ISBN: 978-1-4577-2075-8, DOI: 10.1109/ICDM.2011.146

**Description**

CROSS-REFERENCE TO RELATED APPLICATIONS AND PRIORITY

The present application claims priority from Indian patent application 2074/MUM/2014 filed on 26th June 2014.

TECHNICAL FIELD

The present subject matter described herein, in general, relates to detecting an event from time-series data sequences.

BACKGROUND

An event can be detected from time-series data sequences using several techniques known in the art. Generally the time-series data sequences extracted using a sensor comprise unique signal patterns corresponding to the event. For example, the event in case of a vehicle may be an abrupt braking of the vehicle, rapid rise/fall in acceleration/deceleration of the vehicle, change in direction of the vehicle and the like. The time series data sequences may be processed using techniques known in the art, for recognizing the unique signal patterns and further identifying the event based on the unique signal patterns.

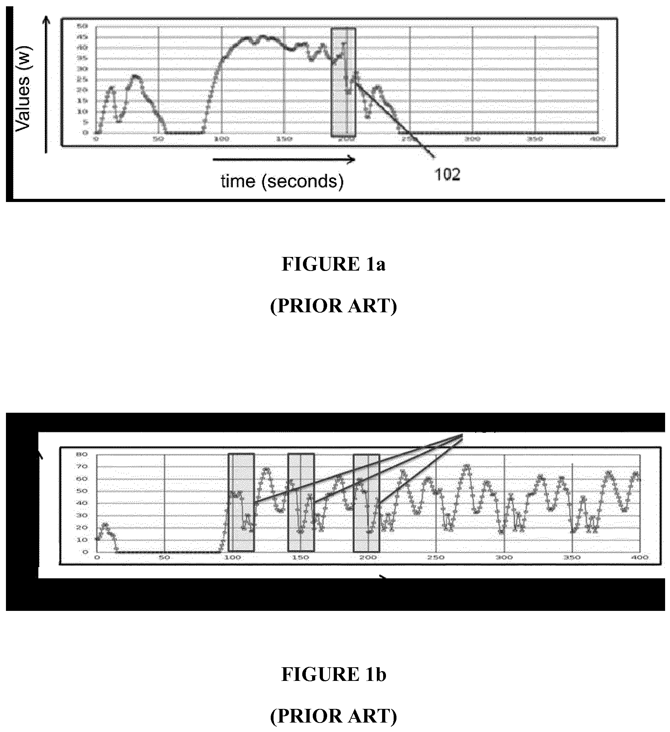

Referring to figure 1a and figure 1b, the time-series data sequences captured using the sensor are illustrated, wherein x-axis represents time in seconds and y-axis represents values of speed. The figure 1a shows a time-series data sequence representing speed of the vehicle. A window 102 of the time-series data sequence highlights an event related to the vehicle. The event may be a hard-stop event related to the vehicle. During the hard-stop event while brakes are applied to the vehicle running at high speeds, the speed of the vehicle may reduce drastically. The unique signal pattern present in the time-series data sequence, as illustrated in the window 102, may be identified and thus the hard-stop event related to the vehicle may be determined. Figure 1b shows a time-series data sequence representing speed of the vehicle in another case. Further, windows 104 highlight the unique signal patterns indicating the hard-stop events related to the vehicle, where speed of the vehicle reduces drastically. US 2014/111647 A1 discloses a system and method for analyzing and wirelessly transmitting information in real-time, comprising capturing snapshots and videos, by utilizing for example a smartphone. The images are analyzed in conjunction with other system data to provide the user: 3 dimensional images, GPS coordinates, safety alerts, etc. In particular, the system is mountable within a vehicle interior to provide: road conditions, dangerous driving situations, the make/model/manufacturer of surrounding cars, GPS coordinates, and the identity of local businesses. The user may also share the information via wireless transmissions with surrounding users possessing the same system, such as for real-time video gaming systems. And the system may also be detached from the vehicle for use in other scenarios, such as searching a merchant database for matching items and wirelessly sending the information to other system users (Abstract). L.S. Ribeiro: "Object recognition for semantic robot vision" discloses recognizing objects in an everyday scene is a major step in unsupervised image understanding. An intelligent agent needs to first identify each object in an environment scene, so it could eventually understand all the dynamics of the semantic content. However, unsupervised learning and unsupervised object recognition remains a great challenge in the vision research area. Our work is a transverse approach in unsupervised object learning and object recognition. We built an agent capable of locating, in a complex scene, an instance of a requested category. The name of a category is uploaded to the agent's system and it autonomously learns the category appearance, by searching the Internet and looking for category examples. Then it explores a static picture of the surrounding environment, looking for an instance of the previously learned category. This dissertation focus on the object detection and object recognition in a complex picture scene. We use Scale Invariant Feature Transform (SIFT) and Roy's Shape Representation (RSR) to represent an object, and an ensemble of several classification techniques to recognize an object. To obtain the object's location on the complex scene we used scene segmentation, based on image colour saliencies, and object extraction based on contour analysis **(Abstract).** Rui Pereira "Learning Visual Object Categories with Global Descriptors and Local Features" discloses Different types of visual object categories can be found in real-world applications. Some categories are very heterogeneous in terms of local features (broad categories) while others are consistently characterized by some highly distinctive local features (narrow categories). The work described in this paper was motivated by the need to develop representations and categorization mechanisms that can be applied to domains involving different types of categories. A second concern of the paper is that these representations and mechanisms have potential for scaling up to large numbers of categories. The approach is based on combinining global shape descriptors with local features. A new shape representation is proposed. Two additional representations are used, one also capturing the object's shape and another based on sets of highly distinctive local features. Basic classifiers following the nearest-neighbor rule were implemented for each representation. A meta-level classifier, based on a voting strategy, was also implemented. The relevance of each representation and classifier to both broad and narrow categories is evaluated on two datasets with a combined total of 114 categories **(Abstract).** Kumar Roy: "Learning words from sights and sounds: a computational model" discloses an implemented computational model of word acquisition which learns directly from raw multimodal sensory input. Set in an information theoretic framework, the model acquires a lexicon by finding and statistically modeling consistent cross-modal structure. The model has been implemented in a system using novel speech processing, computer vision, and machine learning algorithms. In evaluations the model successfully performed speech segmentation, word discovery and visual categorization from spontaneous infant-directed speech paired with video images of single objects. These results demonstrate the possibility of using state-of-the-art techniques from sensory pattern recognition and machine learning to implement cognitive models which can process raw sensor data without the need for human transcription or labeling **(Abstract).** Ehtesham Hassan: "Multi-Sensor Event Detection using Shape Histograms" discloses vehicular sensor data consists of multiple time-series arising from a number of sensors. Using such multi-sensor data we would like to detect occurrences of specific events that vehicles encounter, e.g., corresponding to particular maneuvers that a vehicle makes or conditions that it encounters. Events are characterized by similar waveform patterns re-appearing within one or more sensors. Further such patterns can be of variable duration. In this work, we propose a method for detecting such events in time-series data using a novel feature descriptor motivated by similar ideas in image processing. We define the shape histogram: a constant dimension descriptor that nevertheless captures patterns of variable duration. We demonstrate the efficacy of using shape histograms as features to detect events in an SVM-based, multi-sensor, supervised learning scenario, i.e., multiple time-series are used to detect an event. We present results on real-life vehicular sensor data and show that our technique performs better than available pattern detection implementations on our data, and that it can also be used to combine features from multiple sensors resulting in better accuracy than using any single sensor. Since previous work on pattern detection in time-series has been in the single series context, we also present results using our technique on multiple standard time-series datasets and show that it is the most versatile in terms of how it ranks compared to other published results **(Abstract).** Jason Lines: "A shapelet transform for time series classification" discloses that the problem of time series classification (TSC), where we consider any real-valued ordered data a time series, presents a specific machine learning challenge as the ordering of variables is often crucial in finding the best discriminating features. One of the most promising recent approaches is to find shapelets within a data set. A shapelet is a time series subsequence that is identified as being representative of class membership. The original research in this field embedded the procedure of finding shapelets within a decision tree. We propose disconnecting the process of finding shapelets from the classification algorithm by proposing a shapelet transformation. We describe a means of extracting the k best shapelets from a data set in a single pass, and then use these shapelets to transform data by calculating the distances from a series to each shapelet. We demonstrate that transformation into this new data space can improve classification accuracy, whilst retaining the explanatory power provided by shapelets **(Abstract).** Navin Madicar: "Parameter-free subsequences time series clustering with various-width clusters" discloses that in time series mining, one of the interesting tasks that attract many researchers is time series clustering which is classified into two main categories. Whole time series clustering considers how to cluster multiple time series, and the other one is Subsequence Time Series (STS) clustering, a clustering of subparts or subsequences within a single time series. Deplorably, STS clustering is not preferable even though it had widely been used as a subroutine in various mining tasks, e.g., rule discovery, anomaly detection, or classification, due to the recent finding a decade ago that STS clustering problem can produce meaningless results. There have been numerous attempts to resolve this problem but seemed to be unsuccessful. Until the two most recent attempts, they seem to accomplish in producing meaningful results; however, their approaches do need some predefined constraint values, such as the width of the subsequences that are in fact quite subjective and sensitive. Thus, we propose a novel parameter-free clustering technique to eliminate this problem by utilizing a motif discovery algorithm and some statistical principles to properly determine these parameters. Our experimental results from well-known datasets demonstrate the effectiveness of the proposed algorithm in selecting the proper subsequence width, and in turn leading to meaningful and highly accurate results **(Abstract).** Thanawin Rakthanmanon: "Time Series Epenthesis: Clustering Time Series Streams Requires Ignoring Some Data" discloses given the pervasiveness of time series data in all human endeavors, and the ubiquity of clustering as a data mining application, it is somewhat surprising that the problem of time series clustering from a single stream remains largely unsolved. Most work on time series clustering considers the clustering of individual time series, e.g., gene expression profiles, individual heartbeats or individual gait cycles. The few attempts at clustering time series streams have been shown to be objectively incorrect in some cases, and in other cases shown to work only on the most contrived datasets by carefully adjusting a large set of parameters. In this work, we make two fundamental contributions. First, we show that the problem definition for time series clustering from streams currently used is inherently flawed, and a new definition is necessary. Second, we show that the Minimum Description Length (MDL) framework offers an efficient, effective and essentially parameter-free method for time series clustering. We show that our method produces objectively correct results on a wide variety of datasets from medicine, zoology and industrial process analyses **(Abstract).**

# EP 2 960 806 B1

## SUMMARY

This summary is provided to introduce aspects related to systems and methods for detecting an event from time-series data sequences and the aspects are further described below in the detailed description. This summary is not intended to identify essential features of subject matter nor is it intended for use in determining or limiting the scope of the subject matter.

In one implementation, a system for detecting an event relating to a vehicle from time-series data sequences is as claimed in claim 2.

In another implementation, a method for detecting an event relating to a vehicle from time-series data sequences is as claimed in claim 1.

Yet in another implementation, a non-transitory computer readable medium embodying a program executable in a computing device for detecting an event relating to a vehicle from time-series data sequences is disclosed. The program comprises a program code for receiving the time-series data sequences of variable lengths generated by a plurality of sensors, wherein the time-series data sequences comprise timestamp information. The program comprises a program code for sampling the time-series data sequences at a uniform sampling rate, wherein the time-series data sequences are sampled for generating sample points. The program further comprises a program code for generating a plurality of pairs of sample points using the sample points such that each sample point is paired with one another. The program further comprises a program code for computing a distance matrix (D) and an angle matrix (A) for one or more pairs of the sample points of the plurality of pairs of sample points. The program further comprises a program code for generating a two-dimensional (2D) shape histogram for the time-series data sequence using the distance matrix (D) and the angle matrix (A). The 2D shape histogram is having a constant dimension and represents global distribution of the plurality of pairs of sample points, and wherein the global distribution of the plurality of pairs of sample points is computed using the distance matrix (D) and the angle matrix (A). The program further comprises a program code for concatenating 2D shape histograms for the time-series data sequences based on the timestamp information to generate a concatenated shape histogram. The program further comprises a program code for matching the concatenated shape histogram with a pre-stored set of shape histograms to detect an event.

## BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.

Figure 2 illustrates a network implementation of a system for detecting an event from time-series data sequences, in accordance with an embodiment of the present subject matter.

Figure 3 illustrates the system of Figure 2, in accordance with an embodiment of the present subject matter.

Figure 4a illustrates a time-series data sequence S1 captured using a sensor 1 (pressure sensor), in accordance with an embodiment of the present subject matter.

Figure 4b illustrates a time-series data sequence S2 captured using a sensor 2 (speed sensor), in accordance with an embodiment of the present subject matter.

Figure 4c illustrates a time-series data sequence S3 captured using a sensor 3 (gear sensor), in accordance with an embodiment of the present subject matter.

Figure 5 illustrates a time-series data sequence S4 represented in two-dimensional (2D) Euclidean space.

Figure 6a illustrates a time-series data sequence S5 captured using a sensor.

Figure 6b illustrates the 2D shape histogram corresponding to the time-series data sequence S5.

Figure 7a illustrates a time-series data sequence S6 captured using a sensor.

Figure 7b illustrates the 2D shape histogram corresponding to the time-series data sequence S6.

Figure 8 shows a flowchart illustrating a method for detecting an event from time-series data sequences, in accordance with an embodiment of the present subject matter.

## DETAILED DESCRIPTION

Systems and methods for detecting an event from time-series data sequences are described. The event may be detected from the time-series data sequences upon processing the time-series data sequences. In order to generate the time-series data sequences related to the event, a plurality of sensors may be used. The time-series data sequences generated by the sensors may comprise different waveform characteristics corresponding to the event. Further, the time-series data sequences may be of variable lengths and may also comprise timestamp information.

The time-series data sequences may be sampled at a uniform sampling rate. Further, the time-series data sequences may be sampled for generating sample points. Further, the sample points may be paired with one another to generate a plurality of pairs of sample points.

The time-series data sequences may be represented in a two-dimensional (2D) Euclidean space. The 2D Euclidean space may be used for computing Euclidean distances between the sample points of the plurality of pairs of sample points. The Euclidean distances may be used further for determining a distance matrix. The 2D Euclidean space may further be used for computing angles between the sample points of the plurality of pairs of sample points. The angles between the sample points may be used for determining an angle matrix.

The distance matrix and the angle matrix may be used for determining a global distribution of the plurality of pairs of sample points. The global distribution of the plurality of pairs of sample points may represent a 2D shape histogram, wherein the 2D shape histogram may be of constant dimension. The 2D shape histogram for the time-series data sequences may be concatenated using a linear concatenation technique for generating a concatenated shape histogram. Further, the timestamp information may be used for concatenating the 2D shape histograms.

The concatenated shape histogram may further be matched with a pre-stored set of shape histograms, using a Support Vector Machine (SVM) classifier, for recognizing the event. The pre-stored set of shape histograms may comprise 2D shape histograms associated with an identified category of the event.

While aspects of described system and method for detecting an event from time-series data sequences may be implemented in any number of different computing systems, environments, and/or configurations, the embodiments are described in the context of the following exemplary system.

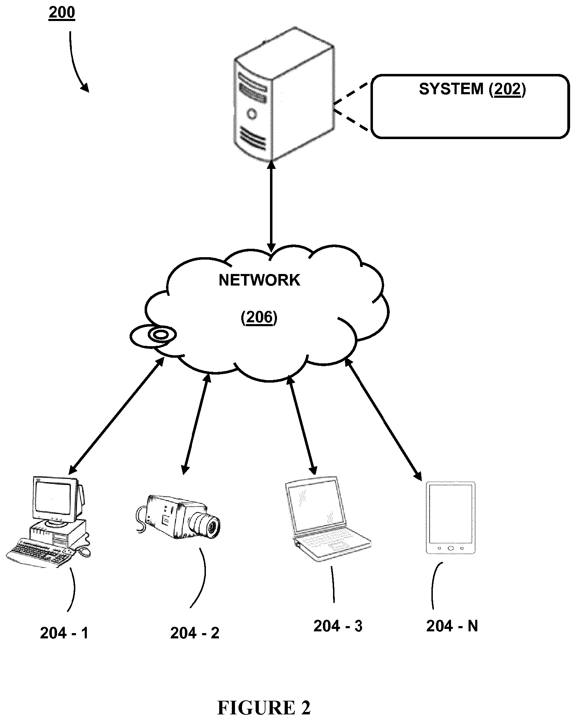

Referring to Figure 2, a network implementation 200 of a system 202 for detecting an event from time-series data sequences is illustrated, in accordance with an embodiment of the present subject matter. In one embodiment, the system 202 may facilitate the detection of an event from time-series data sequences. At first, the system 202 may employ sensors to capture the time-series data sequences. The time-series data sequences may be of variable lengths. The time-series data sequences may be sampled at a uniform sampling rate, wherein the time-series data sequences may be sampled for generating sample points. The system 202 may compute a global distribution of the plurality of pairs of sample points. The global distribution of the plurality of pairs of sample points may represent a 2D shape histogram for a time-series data sequence, wherein the 2D shape histogram may be of constant dimension. The system 202 may generate a concatenated shape histogram using the 2D shape histogram for each time-series data sequence. The system 202 may generate the concatenated shape histogram using the linear concatenation technique. Finally, the system 202 may detect the event by matching the concatenated shape histogram with the pre-stored set of shape histograms. The pre-stored set of shape histograms may comprise 2D shape histograms corresponding to relevant events.

Although the present subject matter is explained considering that the system 202 is implemented for detecting the event from the time-series data sequences, it may be understood that the system 202 may also be implemented in a variety of computing systems, such as a laptop computer, a desktop computer, a notebook, a workstation, a mainframe computer, a server, a network server, a tablet, a mobile phone, and the like. In one embodiment, the system 202 may be implemented in a cloud-based environment. It will be understood that the system 202 may be accessed by multiple users through one or more user devices 204-1, 204-2...204-N, collectively referred to as user device 204 hereinafter, or applications residing on the user device 204. Examples of the user device 204 may include, but are not limited to, a portable computer with a webcam, a personal digital assistant with a camera, a handheld device with a camera, and a digital camera. The user device 204 is communicatively coupled to the system 202 through a network 206.

In one implementation, the network 206 may be a wireless network, a wired network or a combination thereof. The network 206 can be implemented as one of the different types of networks, such as intranet, local area network (LAN), wide area network (WAN), the internet, and the like. The network 206 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 206 may include a variety of network devices, including routers, bridges, servers, computing devices, storage devices, and the like.

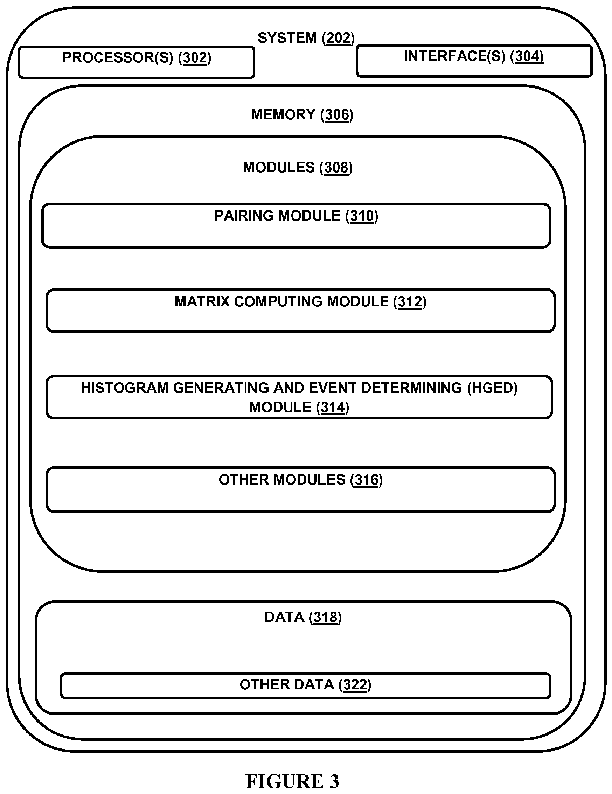

Referring now to Figure 3, the system 202 is illustrated in accordance with an embodiment of the present subject matter. In one embodiment, the system 202 may include at least one processor 302, an input/output (I/O) interface 304, and a memory 306. The at least one processor 302 may be implemented as one or more microprocessors, microcomputers, microcontrollers, digital signal processors, central processing units, state machines, logic circuitries, and/or any devices that manipulate signals based on operational instructions. Further, the at least one processor 302 may comprise a multi-core architecture. Among other capabilities, the at least one processor 302 is configured to fetch and execute computer-readable instructions or modules stored in the memory 306.

The I/O interface 304 may include a variety of software and hardware interfaces, for example, a web interface, a graphical user interface, and the like. The I/O interface 304 may allow the system 202 to interact with a user directly or through the user devices 204. Further, the I/O interface 304 may enable the system 202 to communicate with other computing devices, such as web servers and external data servers (not shown). The I/O interface 304 can facilitate multiple communications within a wide variety of networks and protocol types, including wired networks, for example, LAN, cable, etc., and wireless networks, such as WLAN, cellular, or satellite. The I/O interface 304 may include one or more ports for connecting a number of devices to one another or to another server.

The memory 306 may include any computer-readable medium or computer program product known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, a compact disks (CDs), digital versatile disc or digital video disc (DVDs) and magnetic tapes. The memory 306 may include modules 308 and data 318.

The modules 308 include routines, programs, objects, components, data structures, etc., which perform particular tasks or implement particular abstract data types. In one implementation, the modules 308 may include a pairing module 310, a matrix computing module 312, a histogram generating and event determining (HGED) module 314, and other modules 316. The other modules 316 may include programs or coded instructions that supplement applications and functions of the system 202.

The data 318, amongst other things, serves as a repository for storing data processed, received, and generated by one or more of the modules 308. The data 318 may also include a system database 320, and other data 322. The other data 322 may include data generated as a result of the execution of one or more modules in the other modules 316.

In one implementation, at first, the sensors may be positioned across an environment for detecting events related to the environment. For example, the sensors may be positioned across a vehicle for determining the events related to the vehicle. The events related to the vehicle may comprise an abrupt braking of the vehicle (hard-stop event), rapid rise/fall in acceleration/deceleration of the vehicle, change in direction of the vehicle, and the like. The sensors may capture data related to the event. The data captured by the sensors may be represented as time series data sequences. The time-series data sequences may comprise timestamp information.

Further, the time-series data sequences may be sampled at a uniform sampling rate wherein the time-series data sequences may be sampled for generating sample points. The time-series data sequences captured by the sensors may be of variable lengths such that the time duration of the time-series data sequences may vary. Thus, the time-series data sequences captured by the sensors (more than one sensor) may be used for determining the event related to the vehicle. The event may be determined accurately as the time-series data sequences from multiple sensors may be used.

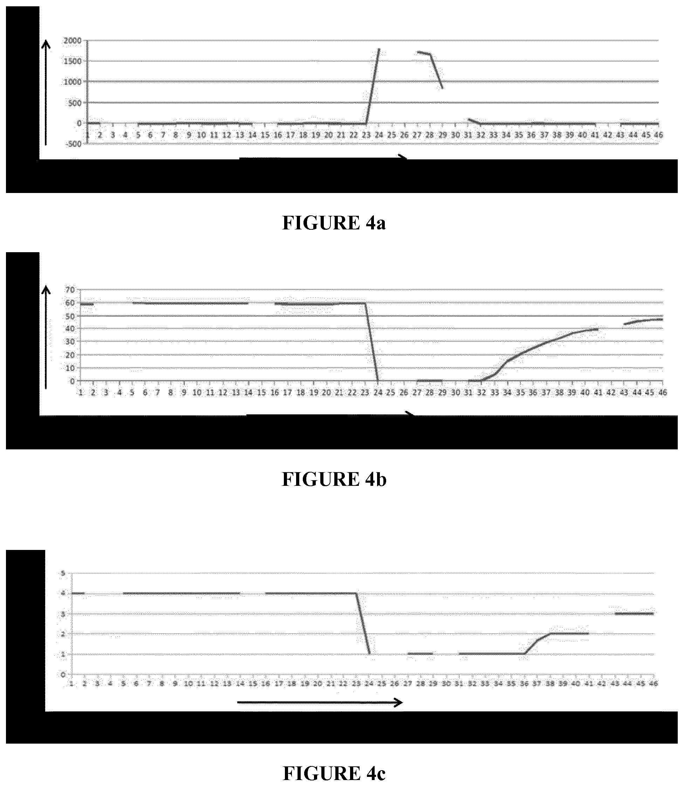

In an example, a time-series data sequence S1 captured using a sensor 1 (pressure sensor) for a hard-stop event related to the vehicle is shown in figure 4a. In figure 4a, x-axis represents time (seconds) and y-axis represents brake cylinder pressure (Pounds per Square Inch, PSI). The time-series data sequence S1 represents a brake cylinder pressure of the vehicle during the hard-stop event. Further, the time-series data sequence S1 may include missing signal values during certain time intervals.

In an example, a time-series data sequence S2 captured using a sensor 2 (speed sensor) for the hard-stop event related to the vehicle is shown in figure 4b. In figure 4b, x-axis represents time (seconds) and y-axis represents speed (Miles per Hour, MPH). The time-series data sequence S2 represents a wheel speed of the vehicle, during the hard-stop event. Further, the time-series data sequence S2 may include missing signal values during certain time intervals.

In an example, a time-series data sequence S3 captured using a sensor 3 (gear sensor) for a hard-stop event related to the vehicle is shown in figure 4c. In figure 4c, x-axis represents time (seconds) and y-axis represents a gear number (numbers, N). The time-series data sequence S3 represents a gear number related to the vehicle, during the hard-stop event. Further, the time-series data sequence S3 may include missing signal values during certain time intervals.

In an example, a signal pattern representing the hard-stop event of the vehicle may be determined using the sensor 1, the sensor 2, and the sensor 3 upon applying a predefined rule 1, as mentioned below,

$$\text{Rule } 1 = \{(\text{Sensor 1 is greater than } s_1) \cap (\text{Sensor 2 is greater than } s_2) \cap (\text{Sensor 3 is in}$$
$$[s_{31}, \ldots, s_{3m}]) \cap (\text{drop in sensor 2 is greater than } s_2^*)\}$$

Here, $s_1$ denotes a positive pressure threshold value, $s_2$ denotes a positive speed threshold value, $[s_{31}, \ldots, s_{3m}]$ denotes the gear numbers, and $s_2^*$ denotes a negative speed threshold. The positive pressure threshold value may refer to a maximum threshold value of the sensors and the negative speed threshold may refer to a minimum threshold value of the sensors.

In another example, extreme boundaries (left boundary and right boundary) of the signal pattern indicative of the event may be defined by a rule 2, as mentioned below,

Rule 2 = Left boundary: {(Sensor1 is less than $s_1$ for consecutive $t_1$ time) ∪ (c seconds before a critical point)}

Right boundary: {(Sensor1 is less than d for consecutive e seconds) ∩ (sensor2 is greater than f for consecutive g seconds) ∪ (35 sample points before the critical point)}

Post capturing the time-series data sequences of variable lengths by the sensors, the system 202 may employ the pairing module 310 to receive the time-series data sequences of variable lengths. The pairing module 310 may further pair the sample points for generating the plurality of pairs of sample points. Each sample point may be paired with one another to generate the plurality of pairs of sample points. The number of pairs (P) of sample points generated for a time-series data sequence 'S' comprising 'L' number of sample points may be calculated using an below mentioned equation 1,

$$P = {}^{L}C_2 \quad \dots\dots\dots \quad \text{Equation 1}$$

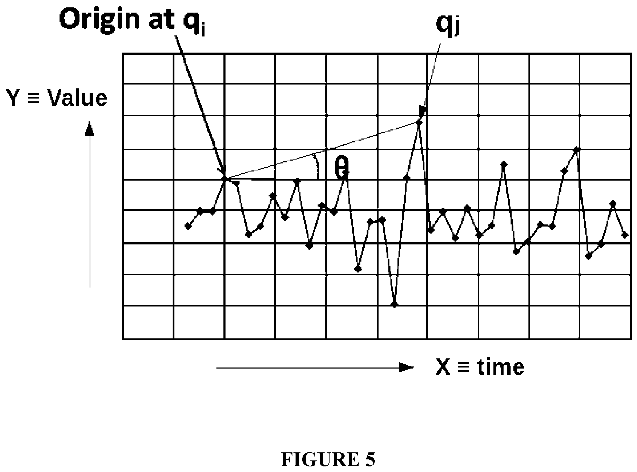

After determining the pairs of sample points, the matrix computing module 312 may represent the time-series data sequences in a two-dimensional (2D) Euclidean space, as shown in figure 5. According to figure 5 an x-axis represents a time (t) of a time-series data sequence S4 and y-axis denotes value (w) of the time-series data sequence S4. The time-series data sequence S4 may comprise a pair of sample points generated between sample points '$q_i$' and '$q_j$'. The sample point '$q_i$' may be located at $(w_i, t_i)$ and the sample point '$q_j$' may be located at $(w_j, t_j)$ in the 2D Euclidean space. The matrix computing module 312 may compute the Euclidean distance (d) between the sample points '$q_i$' and '$q_j$' present in the pair of sample points '$q_i$- $q_j$', in the 2D Euclidean space using a below mentioned equation 2,

$$d = \sqrt{(w_i - w_j)^2 + (t_i - t_j)^2} \quad \dots\dots\dots \quad \text{Equation 2}$$

Similarly, the matrix computing module 312 may compute the Euclidean distances for each pair of the plurality of pairs of the sample points. The Euclidean distances for each pair of the plurality of pairs of the sample points may be represented as a distance matrix.

Post computing the distance matrix, the matrix computing module 312 may normalize the distance matrix by dividing the Euclidean distances present in one or more rows of the distance matrix with a maximum Euclidean distance present in the one or more rows. The normalization of the distance matrix may convert the distance matrix into [0, 1] scale.

Further, the matrix computing module 312 may compute angles between the sample points of the pairs of sample points. For example, an angle '$θ$' between the sample points '$q_i$' (origin point) and '$q_j$' may be computed, as shown in figure 5. Similarly, the angles between the sample points of each pair of the plurality of pairs may be computed. The angles between the sample points of each pair of the plurality of pairs may be represented as an angle matrix.

Post determining the distance matrix and the angle matrix, the matrix computing module 312 may quantize the Euclidean distances and the angles. The Euclidean distances and the angles may be quantized for splitting the Euclidean distances and the angles into bins. Thus, in an example, upon quantizing the Euclidean distances into 'm' levels, the Euclidean distances may be represented as $[d_0, d_1]$ U $[d_1, d_2]$ ... U $[d_{m-1}, d_m]$. Here $[d_0, d_1]$, $[d_1, d_2]$, and $[d_{m-1}, d_m]$ may represent distance bins. Similarly, in an example, upon quantizing the angles into 'n' levels the angles may be represented as $[\alpha_0, \alpha_1]$ U $[\alpha_1, \alpha_2]$ ... U $[\alpha_{n-1}, \alpha_n]$. Here $[\alpha_0, \alpha_1]$ U $[\alpha_1, \alpha_2]$ ... U $[\alpha_{n-1}, \alpha_n]$ may represent angle bins.

After employing the matrix computing module 312, the system 202 may employ the histogram generating and event determining (HGED) module 314. The HGED module 314 may generate a two-dimensional (2D) shape histogram for the time-series data sequence. The 2D shape histogram may represent a global distribution of the plurality of pairs of sample points. The global distribution of the plurality of pairs of sample points may be computed using the distance matrix (D) and the angle matrix (A). The HGED module 314 may compute the global distribution of the plurality of pairs of sample points by computing a shape context of each sample point. The shape context may be defined by a distance-angle based distribution of each sample point with respect to other sample points. In an example, the HGED module 314 may compute the bin (p, q) of the shape context ($h_i$) of a sample point '$q_i$' using a below mentioned equation 3,

$$h_i(p, q) = \sum_{j=1, j \neq i}^{l} \delta(D_{i,j}, A_{i,j}, d_{p-1}, d_p, \alpha_{q-1}, \alpha_q),$$

$$\ldots\ldots\ldots \text{Equation 3}$$

Here,

$$\delta(D_{ij}, A_{i,j}, d_{p-1}, d_p, \alpha_{q-1}, \alpha_q)$$

$$= \begin{cases} 1 & \text{if } D_{i,j} \in [d_{p-1}, d_p], \ A_{i,j} \in [\alpha_{q-1}, \alpha_q] \\ 0 & \text{otherwise} \end{cases}$$

The HGED module 314 may add the shape contexts of the sample points of the plurality of pairs of sample points for computing a cumulative shape histogram ($h_{sum}$). The cumulative shape histogram may define the global distribution of the plurality of pairs of sample points. The bins of the cumulative shape histograms ($h_{sum}$) may represent the count of the plurality of pairs of sample points. In one example, the bin (p, q) may represent the count of the plurality of pairs of sample points arranged within the Euclidean distance [$d_{p-1}$, $d_p$] and within the angle [$\alpha_{q-1}$, $\alpha_q$]. Further, the HGED module 314 may divide cumulative histogram ($h_{sum}$) by a maximum entry for generating the 2D shape histogram. Further, the HGED module 314 may generate the 2D shape histogram corresponding to the each time-series data sequence generated by the plurality of sensors, wherein the 2D shape histogram may be of constant dimension.

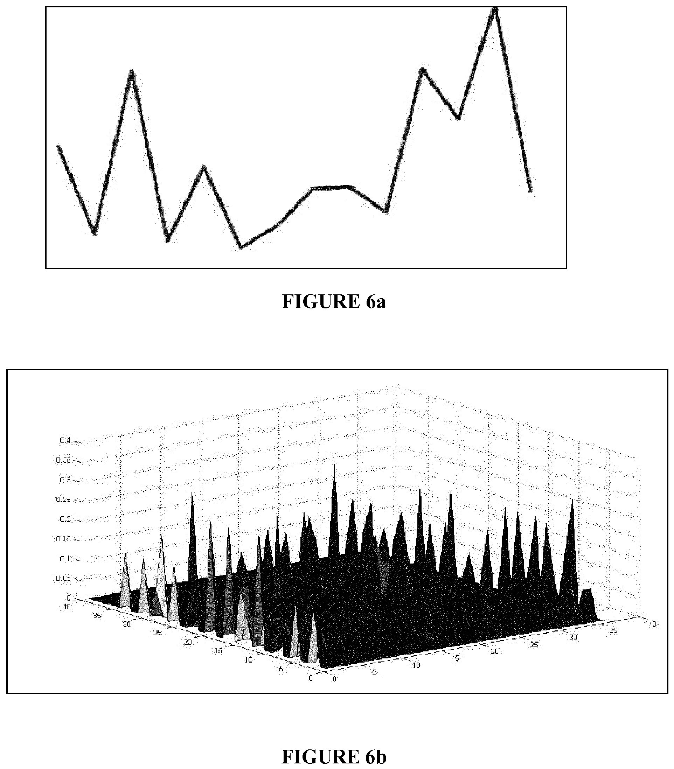

Figure 6a illustrates an example of the time-series data sequence S5 and Figure 6b illustrates the 2D shape histogram corresponding to the time-series data sequence S5 generated by the system 202. Here, the number of distance bins (m) is considered as 40 and number of angle bins (n) is considered as 36.

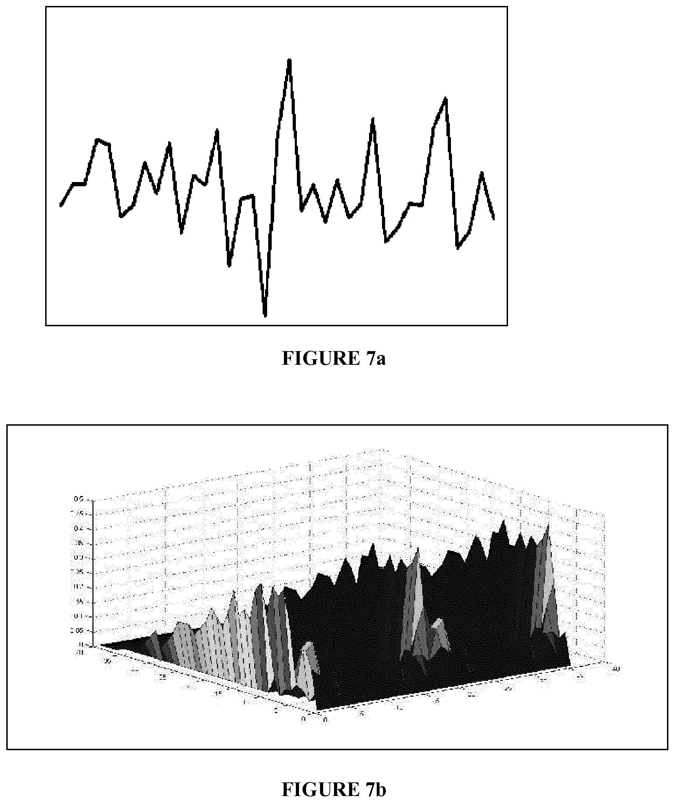

Figure 7a illustrates an example of the time-series data sequence S6 and Figure 7b illustrates the 2D shape histogram corresponding to the time-series data sequence S6 generated by the system 202. Here, the number of distance bins (m) is considered as 40 and number of angle bins (n) is considered as 36.

Post generating the 2D shape histogram for the time-series data sequence generated by the plurality of sensors, the HGED module 314 may concatenate the 2D shape histogram for each time-series data sequence based on the timestamp information for generating a concatenated shape histogram. Further, the 2D shape histograms for the time-series data sequences comprising proximate timestamp information may be concatenated for generating the concatenated shape histogram. The HGED module 314 may employ a linear concatenation technique for generating the concatenated shape histogram. The HGED module 314 may bring together the bins of the shape histograms and may increase the number of dimensions of the feature vector. In an example, the HGED module 314 may convert the distance matrix and the angle matrix of the 2D shape histogram corresponding to the time-series data sequence S5 into one-dimensional (1D) vectors. The HGED module 314 may also convert the distance matrix and the angle matrix of the 2D shape histogram corresponding to the time-series data sequence S6 into one-dimensional (1D) vectors. Further, the HGED module 314 may adjoin the 1D vectors of the time-series data sequence S5 with the 1D vectors of the time-series data sequence S6. The HGED module 314 may adjoin the 1D vectors for employing a linear concatenation technique. Upon employing the linear concatenation technique by the HGED module 314, a concatenated shape histogram may be generated by the HGED module 314.

Thus, the 2D shape histogram for the time-series data sequences derived from sensors employed in the vehicle/environment, may be concatenated by the HGED module 314. Concatenating the 2D shape histogram for the time-series data sequences may bring together the discriminating features of the 2D shape histogram for the time-series data sequences. Thus, concatenating the 2D shape histogram for the time-series data sequences may improve the accuracy of detecting the event related to the vehicle/environment.

Further, the HGED module 314 may match the concatenated shape histogram with a pre-stored set of shape histograms for detecting the event. The pre-stored set of shape histograms may comprise shape histograms corresponding to relevant events. In an example, the HGED module 314 may match the concatenated shape histogram with the pre-stored set of shape histograms using a Support Vector Machine (SVM) classifier. However, in a case, the HGED module 314 may use Radial Basis Function (RBF) kernel with the SVM classifier for matching the concatenated shape histogram with the pre-stored set of shape histograms. Upon determining a successful match of the concatenated shape histogram, the HGED module 314 may determine the event.

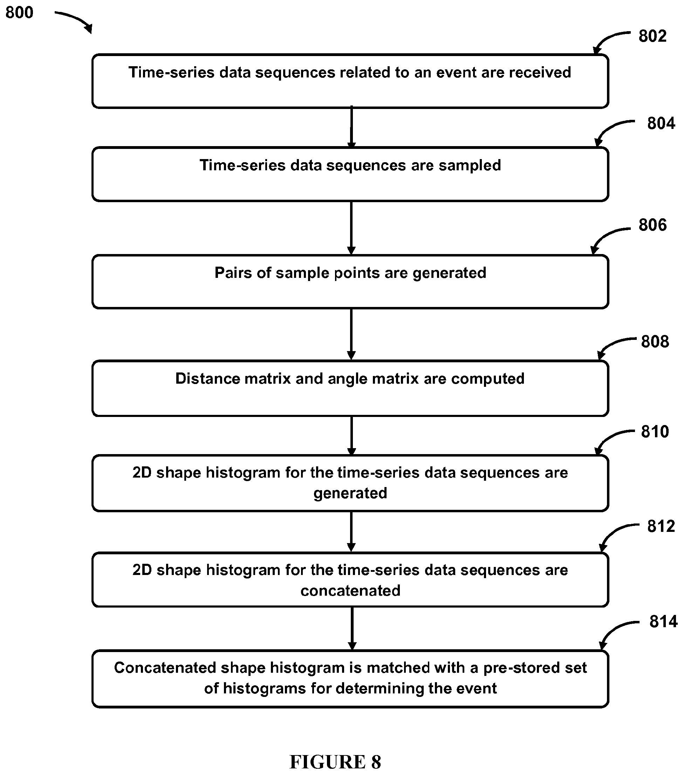

Referring now to Figure 8, the method for detecting an event from time-series data sequences, in accordance with an embodiment of the present subject matter. The method 800 may be described in the general context of computer executable instructions. Generally, computer executable instructions can include routines, programs, objects, components, data structures, procedures, modules, functions, etc., that perform particular functions or implement particular abstract data types. The method 800 may also be practiced in a distributed computing environment where functions are performed by remote processing devices that are linked through a communications network. In a distributed computing environment, computer executable instructions may be located in both local and remote computer storage media, including memory storage devices.

The order in which the method 800 is described is not intended to be construed as a limitation, and any number of the described method blocks can be combined in any order to implement the method 800 or alternate methods. Additionally, individual blocks may be deleted from the method 800 without departing from scope of the subject matter described herein. Furthermore, the method 800 can be implemented in any suitable hardware, software, firmware, or combination thereof. However, for ease of explanation, in the embodiments described below, the method 800 may be considered to be implemented in the above described system 202.

At block 802, the time-series data sequences related to an event are received. Further, the step of receiving time-series data sequences related to the event may be performed by a processor.

At block 804, the time-series data sequences are sampled. The time-series data sequences are sampled for generating sample points. Further, the step of sampling the time-series data sequences may be performed by a processor.

At block 806, the pairs of sample points are generated. Further, each of the sample point may be paired with one another. Further, the step of generating pairs of sample points is performed by the processor.

At block 808, the distance matrix and the angle matrix are computed. Further the distance matrix and the angle matrix are computed in a 2D Euclidean space. Further, the step of computing the distance matrix and the angle matrix is performed by the processor.

At block 810, the 2D shape histogram for the time-series data sequences are generated, wherein the 2D shape histogram for the time-series data sequences represent global distribution of the plurality of pairs of sample points. The global distribution of the plurality of pairs of sample points is computed using the distance matrix (D) and the angle matrix (A). Further, the step of generating the 2D shape histograms is performed by the processor.

At block 812, the 2D shape histogram for the time-series data sequences are concatenated. Further, the 2D shape histogram for the time-series data sequences are concatenated using a linear concatenation technique for generating a concatenated shape histogram. Further, the step of concatenating the 2D shape histogram for the time-series data sequences is performed by the processor.

At block 814, the concatenated shape histogram is matched with a pre-stored set of histograms for determining the event. Further, the step of matching the concatenated shape histogram with the pre-stored shape histograms, for determining the event, is performed by the processor.

Although implementations for detecting an event from time-series data sequences have been described in language specific to structural features and/or methods, it is to be understood that the appended claims are not necessarily limited to the specific features or methods described. Rather, the specific features and methods are disclosed as examples of implementations for monitoring the user activities on the software application external to an organization.

**Claims**

1. A method for detecting an event relating to a vehicle from time-series data sequences, the method comprising:

  receiving, by a processor, the time-series data sequences of variable lengths, generated by a plurality of sensors positioned across a vehicle for determining the event related to the vehicle, wherein the time-series data sequences comprise timestamp information, wherein the sensors includes a pressure sensor, a speed sensor, a gear sensor for capturing the time-series data sequences for an abrupt braking of the vehicle, wherein the event related to the vehicle includes one of the abrupt braking of the vehicle, a rapid rise or fall in acceleration or deceleration of the vehicle, and a change in direction of the vehicle;
  sampling the time-series data sequences at a uniform sampling rate for generating sample points, wherein a time-series data sequence S1 is captured from the pressure sensor measuring a brake cylinder pressure during the abrupt braking, wherein a time-series data sequence S2 is captured from the speed sensor measuring wheel speed during the abrupt braking, wherein a time-series data sequence S3 is captured from the gear sensor measuring gear number during the abrupt braking, wherein a signal pattern representing the abrupt braking of the vehicle is determined by applying rule comprising a positive pressure threshold value compared against the S1, a positive speed threshold value compared against S2, a negative speed threshold value compared against S2, gear numbers compared against S3, wherein the positive pressure threshold value corresponds to a maximum threshold value of the pressure sensor, and the negative speed threshold value corresponds to a minimum threshold value of the speed sensor;
  generating, by the processor, for each time-series data sequences a plurality of pairs of sample points using the sample points generated for said sequence, wherein the plurality of pairs of sample points are generated by pairing each sample point with one another;

computing, by the processor, a distance matrix (D) and an angle matrix (A) for one or more pairs of the sample points of the plurality of pairs of sample points, wherein the distance matrix (D) is computed by calculating Euclidean distances between the sample points present in the pairs of the sample points, and wherein the Euclidean distances are computed in a two-dimensional Euclidean space, wherein the angle matrix (A) is computed by calculating angles between the sample points present in the pairs of the sample points, and wherein the angles are computed in a two-dimensional Euclidean space, and further normalizing the distance matrix (D) by dividing the Euclidean distances of one or more rows with a maximum Euclidean distance of the one or more rows;

generating, by the processor, a two-dimensional (2D) shape histogram for the time-series data sequences using the distance matrix (D) and the angle matrix (A), wherein the 2D shape histogram have a constant dimension and the 2D shape histogram represents a global distribution of the plurality of pairs of sample points, wherein the 2D shape histograms for the one or more time-series data sequences comprising proximate timestamp information are concatenated to generate the concatenated shape histogram, and wherein the global distribution of the plurality of pairs of sample points is obtained by computing a shape context of each sample point, wherein the shape context is defined by a distance-angle based distribution of each sample point with respect to other sample points, and also to add the shape contexts of the sample points of the plurality of pairs of sample points for computing a cumulative shape histogram, wherein bins of the cumulative shape histogram represents a count of the plurality of pairs of sample points;

concatenating, by the processor, the 2D shape histograms for one or more time-series data sequences, derived from the plurality of sensors positioned across the vehicle, based on the timestamp information to generate a concatenated shape histogram, wherein the concatenated shape histogram is generated by converting the distance matrix (D) and the angle matrix (A) into one-dimensional vectors and merging the one-dimensional (1D) vectors, wherein the concatenated shape histogram for the one or more time-series data sequences includes discriminating features of the 2D shape histograms for the one or more time-series data sequences and improves the accuracy of detecting the event related to the vehicle; and

matching, by the processor, the concatenated shape histogram with a pre-stored set of shape histograms to detect the event using a Radial Basis Function (RBF) kernel with a Support Vector Machine (SVM) classifier, wherein the pre-stored set of shape histograms comprise shape histograms corresponding to a relevant event.

2. A system (202) for detecting an event relating to a vehicle from time-series data sequences, the system (202) comprising:

a processor (302);
a memory (306) coupled to the processor (302), wherein the processor (302) is capable for executing a plurality of modules (308) stored in the memory (306), and wherein the plurality of modules (308) comprising:
a pairing module (310),

to receive the time-series data sequences of variable lengths generated by a plurality of sensors positioned across a vehicle for determining the event related to the vehicle, wherein the time-series data sequences comprise timestamp information, wherein the sensors includes a pressure sensor, a speed sensor, a gear sensor for capturing the time-series data sequences for an abrupt braking of the vehicle, wherein the event related to the vehicle includes one of the abrupt braking of the vehicle, a rapid rise or fall in acceleration or deceleration of the vehicle, and a change in direction of the vehicle;
to sample the time-series data sequences at a uniform sampling rate for generating sample points, wherein a time-series data sequence S1 is captured from the pressure sensor measuring a brake cylinder pressure during the abrupt braking, wherein a time-series data sequence S2 is captured from the speed sensor measuring wheel speed during the abrupt braking, wherein a time-series data sequence S3 is captured from the gear sensor measuring gear number during the abrupt braking, wherein a signal pattern representing the abrupt braking of the vehicle is determined by applying rule comprising a positive pressure threshold value compared against the S1, a positive speed threshold value compared against S2, a negative speed threshold value compared against S2, gear numbers compared against S3, wherein the positive pressure threshold value corresponds to a maximum threshold value of the pressure sensor, and the negative speed threshold value corresponds to a minimum threshold value of the speed sensor;
to generate, for each time-series data sequences a plurality of pairs of sample points using the sample points generated for said sequence such that each sample point is paired with one another;
a matrix computing module (312),
to compute a distance matrix (D) and an angle matrix (A) for one or more pairs of the sample points of the plurality of pairs of sample points, wherein the distance matrix (D) is computed by calculating Euclidean distances between the sample points present in the pairs of the sample points, and wherein the Euclidean distances are computed in a two-dimensional Euclidean space, wherein the angle matrix (A) is computed by calculating angles between the sample points present in the pairs of the sample points, and wherein the angles are computed in a two-dimensional Euclidean space, wherein the matrix computing module (312) further normalizes the distance matrix (D) by dividing the Euclidean distances of one or more rows with a maximum Euclidean distance of the one or more rows;
a histogram generating and event determining (HGED) module (314),

to generate a two-dimensional (2D) shape histogram for the time-series data sequences using the distance matrix (D) and the angle matrix (A), wherein the time-series data sequences comprising proximate timestamp information are concatenated to generate the concatenated shape histogram, wherein the 2D shape histogram have a constant dimension, and the 2D shape histogram represents global distribution of the plurality of pairs of sample points, and wherein the global distribution of the plurality of pairs of sample points is obtained by computing a shape context of each sample point, wherein the shape context is defined by a distance-angle based distribution of each sample point with respect to other sample points, and also to add the shape contexts of the sample points of the plurality of pairs of sample points for computing a cumulative shape histogram, wherein bins of the cumulative shape histogram represents a count of the plurality of pairs of sample points;
to concatenate the 2D shape histograms for one or more time-series data sequences, derived from the plurality of sensors positioned across the vehicle, based on the timestamp information to generate a concatenated shape histogram, wherein the concatenated shape histogram is generated by converting the distance matrix (D) and the angle matrix (A) into one-dimensional vectors and merging the one-dimensional (1D) vectors, wherein the concatenated shape histogram for the one or more time-series data sequences includes discriminating features of the 2D shape histograms for the one or more time-series data sequences and improves the accuracy of detecting the event related to the vehicle; and
to match the concatenated shape histogram with a pre-stored set of shape histograms to detect the event using a Radial Basis Function (RBF) kernel with a Support Vector Machine (SVM) classifier, wherein the pre-stored set of shape histograms comprise shape histograms corresponding to a relevant event.

**Patentansprüche**

1. Verfahren zum Erkennen eines Ereignisses, das sich auf ein Fahrzeug bezieht, aus Sequenzen von Zeitseriendaten, das Verfahren umfassend:

Empfangen der Sequenzen von Zeitseriendaten variabler Länge durch einen Prozessor, die von einer Vielzahl von Sensoren erzeugt wurden, die über einem Fahrzeug positioniert sind, um das Ereignis in Bezug auf das Fahrzeug zu bestimmen, wobei die Sequenzen von Zeitseriendaten Zeitstempelinformationen umfassen, wobei die Sensoren einen Drucksensor, einen Geschwindigkeitssensor und einen Getriebesensor zum Erfassen der Sequenzen von Zeitseriendaten für ein abruptes Abbremsen des Fahrzeugs einschließen, wobei das Ereignis in Bezug auf das Fahrzeug das abrupte Abbremsen des Fahrzeugs, einen schnellen Anstieg oder Abfall der Beschleunigung oder Verzögerung des Fahrzeugs und eine Richtungsänderung des Fahrzeugs einschließt;
Abtasten der Sequenzen von Zeitseriendaten mit einer einheitlichen Abtastrate zur Erzeugung von Abtastpunkten, wobei eine Sequenz von Zeitseriendaten S1 von dem Drucksensor erfasst wird, der einen Bremszylinderdruck während der abrupten Bremsung misst, wobei eine Sequenz von Zeitseriendaten S2 von dem Geschwindigkeitssensor erfasst wird, der die Radgeschwindigkeit während der abrupten Bremsung misst, wobei eine Sequenz von Zeitseriendaten S3 von dem Getriebesensor erfasst wird, der die Getriebenummer während des abrupten Bremsens misst, wobei ein Signalmuster, das das abrupte Bremsen des Vehikels repräsentiert, durch Anwendung einer Regel bestimmt wird, die einen positiven Druckschwellenwert, der mit S1 verglichen wird, einen positiven Geschwindigkeitsschwellenwert, der mit S2 verglichen wird, einen negativen Geschwindigkeitsschwellenwert, der mit S2 verglichen wird, und Getriebenummern, die mit S3 verglichen werden, umfasst, wobei der positive Druckschwellenwert einem maximalen Schwellenwert des Drucksensors entspricht und der negative Geschwindigkeitsschwellenwert einem minimalen Schwellenwert des Geschwindigkeitssensors entspricht;
Erzeugen einer Vielzahl von Paaren von Abtastpunkten durch den Prozessor für jede Sequenz von Zeitseriendaten unter Verwendung der für die Sequenz erzeugten Abtastpunkte, wobei die Vielzahl von Paaren von Abtastpunkten durch Paarung jedes Abtastpunkts mit einem anderen erzeugt wird;
Berechnen einer Abstandsmatrix (D) und einer Winkelmatrix (A) für ein oder mehrere Paare der Probenpunkte aus der Vielzahl der Paare von Probenpunkten durch den Prozessor, wobei die Abstandsmatrix (D) durch Berechnen euklidischer Abstände zwischen den in den Paaren der Probenpunkte vorhandenen Probenpunkten berechnet wird und wobei die euklidischen Abstände in einem zweidimensionalen euklidischen Raum berechnet werden, wobei die Winkelmatrix (A) durch Berechnen von Winkeln zwischen den in den Paaren der Probenpunkte vorhandenen Probenpunkten berechnet wird, und wobei die Winkel in einem zweidimensionalen euklidischen Raum berechnet werden und ferner die Abstandsmatrix (D) normalisiert wird, indem die euklidischen Abstände einer oder mehrerer Zeilen durch einen maximalen euklidischen Abstand der einen oder mehreren Zeilen dividiert werden;

Erzeugen eines zweidimensionalen (2D) Formhistogramms für die Sequenzen von Zeitseriendaten durch den Prozessor unter Verwendung der Abstandsmatrix (D) und der Winkelmatrix (A), wobei das 2D-Formhistogramm eine konstante Dimension aufweist und das 2D-Formhistogramm eine globale Verteilung der Vielzahl von Paaren von Probenpunkten darstellt, wobei die 2D-Formhistogramme für die eine oder mehrere Sequenzen von Zeitseriendaten, die unmittelbare Zeitstempelinformationen umfassen, verkettet werden, um das verkettete Formhistogramm zu erzeugen, und wobei die globale Verteilung der Vielzahl von Paaren von Probenpunkten durch Berechnen eines Formkontextes jedes Probenpunktes erhalten wird, wobei der Formkontext durch eine auf dem Abstandswinkel basierende Verteilung jedes Probenpunkts in Bezug auf andere Probenpunkte definiert ist, und auch die Formkontexte der Probenpunkte der Vielzahl von Paaren von Probenpunkten zu addieren, um ein kumulatives Formhistogramm zu berechnen, wobei Bins des kumulativen Formhistogramms eine Anzahl der Vielzahl von Paaren von Probenpunkten darstellen;

Verketten der 2D-Formhistogramme für eine oder mehrere Sequenzen von Zeitseriendaten, die von der Vielzahl von Sensoren, die quer über das Fahrzeug positioniert sind, abgeleitet sind, durch den Prozessor, basierend auf der Zeitstempelinformation, um ein verkettetes Formhistogramm zu erzeugen, wobei das verkettete Formhistogramm erzeugt wird, indem die Abstandsmatrix (D) und die Winkelmatrix (A) in eindimensionale Vektoren umgewandelt werden und die eindimensionalen (1D) Vektoren zusammengeführt werden, wobei das verkettete Formhistogramm für die eine oder mehrere Sequenzen von Zeitseriendaten diskriminierende Merkmale der 2D-Formhistogramme für die eine oder mehrere Sequenzen von Zeitseriendaten einschließt und die Genauigkeit der Erkennung des mit dem Fahrzeug verbundenen Ereignisses verbessert; und

Abgleichen des verketteten Formhistogramms mit einem vorgespeicherten Satz von Formhistogrammen durch den Prozessor, um das Ereignis unter Verwendung eines Kerns mit Radialbasisfunktion (RBF) mit einem Klassifikator einer Unterstützungsvektormaschine (SVM) zu erkennen, wobei der vorgespeicherte Satz von Formhistogrammen Formhistogramme umfasst, die einem relevanten Ereignis entsprechen.

2. System (202) zum Erkennen eines Ereignisses, das sich auf ein Fahrzeug bezieht, aus Sequenzen von Zeitseriendaten, das System (202) umfassend:

einen Prozessor (302);
einen mit dem Prozessor (302) gekoppelten Speicher (306), wobei der Prozessor (302) in der Lage ist, eine Vielzahl von in dem Speicher (306) gespeicherten Modulen (308) auszuführen, und wobei die Vielzahl von Modulen (308) Folgendes umfasst:

ein Kopplungsmodul (310),
Zum Empfangen der Sequenzen von Zeitseriendaten variabler Länge, die von einer Vielzahl von Sensoren erzeugt wurden, die über einem Fahrzeug positioniert sind, um das Ereignis in Bezug auf das Fahrzeug zu bestimmen, wobei die Sequenzen von Zeitseriendaten Zeitstempelinformationen umfassen, wobei die Sensoren einen Drucksensor, einen Geschwindigkeitssensor und einen Getriebesensor zum Erfassen der Sequenzen von Zeitseriendaten für ein abruptes Abbremsen des Fahrzeugs einschließen, wobei das Ereignis in Bezug auf das Fahrzeug das abrupte Abbremsen des Fahrzeugs, einen schnellen Anstieg oder Abfall der Beschleunigung oder Verzögerung des Fahrzeugs und eine Richtungsänderung des Fahrzeugs einschließt;

Zum Abtasten der Sequenzen von Zeitseriendaten mit einer einheitlichen Abtastrate zur Erzeugung von Abtastpunkten, wobei eine Sequenz von Zeitseriendaten S1 von dem Drucksensor erfasst wird, der einen Bremszylinderdruck während der abrupten Bremsung misst, wobei eine Sequenz von Zeitseriendaten S2 von dem Geschwindigkeitssensor erfasst wird, der die Radgeschwindigkeit während der abrupten Bremsung misst, wobei eine Sequenz von Zeitseriendaten S3 von dem Getriebesensor erfasst wird, der die Getriebenummer während des abrupten Bremsens misst, wobei ein Signalmuster, das das abrupte Bremsen des Vehikels repräsentiert, durch Anwendung einer Regel bestimmt wird, die einen positiven Druckschwellenwert, der mit S1 verglichen wird, einen positiven Geschwindigkeitsschwellenwert, der mit S2 verglichen wird, einen negativen Geschwindigkeitsschwellenwert, der mit S2 verglichen wird, und Getriebenummern, die mit S3 verglichen werden, umfasst, wobei der positive Druckschwellenwert einem maximalen Schwellenwert des Drucksensors entspricht und der negative Geschwindigkeitsschwellenwert einem minimalen Schwellenwert des Geschwindigkeitssensors entspricht;

zum Erzeugen einer Vielzahl von Paaren von Abtastpunkten für jede Sequenz von Zeitseriendaten unter Verwendung der für diese Sequenz erzeugten Abtastpunkte, sodass jeder Abtastpunkt mit einem anderen gepaart ist;

ein Matrixberechnungsmodul (312),

zum Berechnen einer Abstandsmatrix (D) und einer Winkelmatrix (A) für ein oder mehrere Paare der Probenpunkte aus der Vielzahl von Paaren von Probenpunkten, wobei die Abstandsmatrix (D) durch Berechnen euklidischer Abstände zwischen den in den Paaren der Probenpunkte vorhandenen Probenpunkten berechnet wird, und wobei die euklidischen Abstände in einem zweidimensionalen euklidischen Raum berechnet werden, wobei die Winkelmatrix (A) durch Berechnen von Winkeln zwischen den in den Paaren der Probenpunkte vorhandenen Probenpunkten berechnet wird und wobei die Winkel in einem zweidimensionalen euklidischen Raum berechnet werden, wobei das Matrixberechnungsmodul (312) ferner die Abstandsmatrix (D) normalisiert, indem es die euklidischen Abstände von einer oder mehreren Zeilen durch einen maximalen euklidischen Abstand der einen oder mehreren Zeilen teilt;

ein Modul zur Erzeugung von Histogrammen und zur Bestimmung von Ereignissen (HGED) (314),

zum Erzeugen eines zweidimensionalen (2D) Formhistogramms für die Sequenzen von Zeitseriendaten unter Verwendung der Abstandsmatrix (D) und der Winkelmatrix (A), wobei die Sequenzen von Zeitseriendaten, die unmittelbare Zeitstempelinformationen umfassen, verkettet werden, um das verkettete Formhistogramm zu erzeugen, wobei das 2D-Formhistogramm eine konstante Dimension aufweist und das 2D-Formhistogramm die globale Verteilung der Vielzahl von Paaren von Probenpunkten darstellt, und wobei die globale Verteilung der Vielzahl von Paaren von Probenpunkten durch Berechnen eines Formkontextes jedes Probenpunktes erhalten wird, wobei der Formkontext durch eine abstandswinkelbasierte Verteilung jedes Probenpunktes in Bezug auf andere Probenpunkte definiert ist, und auch zum Addieren der Formkontexte der Probenpunkte der Vielzahl von Paaren von Probenpunkten zum Berechnen eines kumulativen Formhistogramms, wobei Bins des kumulativen Formhistogramms eine Anzahl der Vielzahl von Paaren von Probenpunkten darstellt;

Zum Verketten der 2D-Formhistogramme für eine oder mehrere Sequenzen von Zeitseriendaten, die von der Vielzahl von Sensoren, die quer über das Fahrzeug positioniert sind, abgeleitet sind, basierend auf der Zeitstempelinformation, um ein verkettetes Formhistogramm zu erzeugen, wobei das verkettete Formhistogramm erzeugt wird, indem die Abstandsmatrix (D) und die Winkelmatrix (A) in eindimensionale Vektoren umgewandelt werden und die eindimensionalen (1D) Vektoren zusammengeführt werden, wobei das verkettete Formhistogramm für die eine oder mehrere Sequenzen von Zeitseriendaten diskriminierende Merkmale der 2D-Formhistogramme für die eine oder mehrere Sequenzen von Zeitseriendaten einschließt und die Genauigkeit der Erkennung des mit dem Fahrzeug verbundenen Ereignisses verbessert; und

Zum Abgleichen des verketteten Formhistogramms mit einem vorgespeicherten Satz von Formhistogrammen, um das Ereignis unter Verwendung eines Kerns mit Radialbasisfunktion (RBF) mit einem Klassifikator einer Unterstützungsvektormaschine (SVM) zu erkennen, wobei der vorgespeicherte Satz von Formhistogrammen Formhistogramme umfasst, die einem relevanten Ereignis entsprechen.

## Revendications

1. Procédé de détection d'un événement lié à un véhicule à partir de séquences de données en série temporelle, le procédé comprenant :

la réception, par un processeur, des séquences de données en série temporelle de longueurs variables, générées par une pluralité de capteurs positionnés sur un véhicule pour déterminer l'événement lié au véhicule, dans lequel les séquences de données en série temporelle comprennent des informations d'horodatage, dans lequel les capteurs comportent un capteur de pression, un capteur de vitesse, un capteur de rapport pour capturer les séquences de données en série temporelle pour un freinage brusque du véhicule, dans lequel l'événement lié au véhicule comporte l'un du freinage brusque du véhicule, d'une montée ou d'une descente rapide de l'accélération ou de la décélération du véhicule, et d'un changement de direction du véhicule ;

l'échantillonnage des séquences de données en série temporelle à un taux d'échantillonnage uniforme pour générer des points d'échantillon, dans lequel une séquence de données en série temporelle S1 est capturée à partir du capteur de pression mesurant une pression de cylindre de frein pendant le freinage brusque, dans lequel une séquence de données en série temporelle S2 est capturée à partir du capteur de vitesse mesurant la vitesse de roue pendant le freinage brusque, dans lequel une séquence de données en série temporelle S3 est capturée à partir du capteur de rapport mesurant le numéro de rapport pendant le freinage brusque, dans lequel un modèle de signal représentant le freinage brusque du véhicule est déterminé en appliquant une règle comprenant une valeur seuil de pression positive comparée à S1, une valeur seuil de vitesse positive comparée à S2, une valeur seuil de vitesse négative comparée à S2, des numéros de rapport comparés à S3, dans lequel la valeur seuil de pression positive correspond à une valeur seuil maximale du capteur de pression, et la valeur seuil de vitesse négative correspond à une valeur seuil minimale du capteur de vitesse ;

la génération, par le processeur, pour chaque séquence de données en série temporelle, d'une pluralité de paires de points d'échantillon en utilisant les points d'échantillon générés pour ladite séquence, dans lequel la pluralité de paires de points d'échantillon est générée en appariant chaque point d'échantillon à un autre ;

le calcul, par le processeur, d'une matrice de distance (D) et d'une matrice d'angle (A) pour une ou plusieurs paires de points d'échantillon de la pluralité de paires de points d'échantillon, dans lequel la matrice de distance (D) est calculée en calculant des distances euclidiennes entre les points d'échantillon présents dans les paires de points d'échantillon, et dans lequel les distances euclidiennes sont calculées dans un espace euclidien bidimensionnel, dans lequel la matrice d'angle (A) est calculée en calculant des angles entre les points d'échantillon présents dans les paires de points d'échantillon, et dans lequel les angles sont calculés dans un espace euclidien bidimensionnel, et également la normalisation de la matrice de distance (D) en divisant les distances euclidiennes d'une ou plusieurs lignes par une distance euclidienne maximale de la ou des lignes ;

la génération, par le processeur, d'un histogramme de forme bidimensionnel (2D) pour les séquences de données en série temporelle en utilisant la matrice de distance (D) et la matrice d'angle (A), dans lequel l'histogramme de forme 2D a une dimension constante et l'histogramme de forme 2D représente une distribution globale de la pluralité de paires de points d'échantillon, dans lequel les histogrammes de forme 2D pour la ou les séquences de données en série temporelle comprenant des informations d'horodatage proche sont concaténés pour générer l'histogramme de forme concaténé, et dans lequel la distribution globale de la pluralité de paires de points d'échantillon est obtenue en calculant un contexte de forme de chaque point d'échantillon, dans lequel le contexte de forme est défini par une distribution basée sur la distance-angle de chaque point d'échantillon par rapport à d'autres points d'échantillon, et également pour ajouter les contextes de forme des points d'échantillon de la pluralité de paires de points d'échantillon pour calculer un histogramme de forme cumulatif, dans lequel les compartiments de l'histogramme de forme cumulatif représentent un décompte de la pluralité de paires de points d'échantillon ;

la concaténation, par le processeur, des histogrammes de forme 2D pour une ou plusieurs séquences de données en série temporelle, dérivées de la pluralité de capteurs positionnés sur le véhicule, sur la base des informations d'horodatage pour générer un histogramme de forme concaténé, dans lequel l'histogramme de forme concaténé est généré par conversion de la matrice de distance (D) et de la matrice d'angle (A) en vecteurs unidimensionnels et fusion des vecteurs unidimensionnels (1D), dans lequel l'histogramme de forme concaténé pour la ou les séquences de données en série temporelle comporte des caractéristiques discriminantes des histogrammes de forme 2D pour la ou les séquences de données en série temporelle et améliore la précision de la détection de l'événement lié au véhicule ; et

la mise en correspondance, par le processeur, de l'histogramme de forme concaténé avec un ensemble pré-stocké d'histogrammes de forme pour détecter l'événement à l'aide d'un noyau de fonction de base radiale (RBF) avec un classificateur de machine à vecteurs de support (SVM), dans lequel l'ensemble pré-stocké d'histogrammes de forme comprend des histogrammes de forme correspondant à un événement pertinent.

2. Système (202) de détection d'un événement lié à un véhicule à partir de séquences de données en série temporelle, le système (202) comprenant :

un processeur (302) ;
une mémoire (306) couplée au processeur (302), dans lequel le processeur (302) est capable d'exécuter une pluralité de modules (308) stockés dans la mémoire (306), et dans lequel la pluralité de modules (308) comprend :

un module d'appairage (310),

pour recevoir les séquences de données en série temporelle de longueurs variables, générées par une pluralité de capteurs positionnés sur un véhicule pour déterminer l'événement lié au véhicule, dans lequel les séquences de données en série temporelle comprennent des informations d'horodatage, dans lequel les capteurs comportent un capteur de pression, un capteur de vitesse, un capteur de rapport pour capturer les séquences de données en série temporelle pour un freinage brusque du véhicule, dans lequel l'événement lié au véhicule comporte l'un du freinage brusque du véhicule, d'une montée ou d'une descente rapide de l'accélération ou de la décélération du véhicule, et d'un changement de direction du véhicule ;

pour échantillonner les séquences de données en série temporelle à un taux d'échantillonnage uniforme pour générer des points d'échantillon, dans lequel une séquence de données en série temporelle S1 est capturée à partir du capteur de pression mesurant une pression de cylindre de frein pendant le freinage brusque, dans lequel une séquence de données en série temporelle S2 est capturée à partir du capteur de vitesse mesurant la vitesse de roue pendant le freinage brusque, dans lequel une séquence de données en série temporelle S3 est capturée à partir du capteur de rapport mesurant le numéro de rapport pendant le freinage brusque, dans lequel un modèle de signal représentant le freinage brusque du véhicule est déterminé en appliquant une règle comprenant une valeur seuil de pression positive comparée à S1, une valeur seuil de vitesse positive comparée à S2, une valeur seuil de vitesse négative comparée à S2, des numéros de rapport comparés à S3, dans lequel la valeur seuil de pression positive correspond à une valeur seuil maximale du capteur de pression, et la valeur seuil de vitesse négative correspond à une valeur seuil minimale du capteur de vitesse ;

pour générer, pour chaque séquence de données chronologique, une pluralité de paires de points d'échantillon en utilisant les points d'échantillon générés pour ladite séquence de telle sorte que chaque point d'échantillon soit apparié à un autre ;

un module de calcul matriciel (312),

pour calculer une matrice de distance (D) et une matrice d'angle (A) pour une ou plusieurs paires de points d'échantillon de la pluralité de paires de points d'échantillon, dans lequel la matrice de distance (D) est calculée en calculant des distances euclidiennes entre les points d'échantillon présents dans les paires de points d'échantillon, et dans lequel les distances euclidiennes sont calculées dans un espace euclidien bidimensionnel, dans lequel la matrice d'angle (A) est calculée en calculant des angles entre les points d'échantillon présents dans les paires de points d'échantillon, et dans lequel les angles sont calculés dans un espace euclidien bidimensionnel, dans lequel le module de calcul matriciel (312) normalise également de la matrice de distance (D) en divisant les distances euclidiennes d'une ou plusieurs lignes par une distance euclidienne maximale de la ou des lignes ;

un module de génération d'histogramme et de détermination d'événements (HGED) (314),

pour générer un histogramme de forme bidimensionnel (2D) pour les séquences de données en série temporelle en utilisant la matrice de distance (D) et la matrice d'angle (A), dans lequel les séquences de données en série temporelle comprenant des informations d'horodatage proches sont concaténées pour générer l'histogramme de forme concaténé, dans lequel l'histogramme de forme 2D a une dimension constante, et l'histogramme de forme 2D représente la distribution globale de la pluralité de paires de points d'échantillon, et dans lequel la distribution globale de la pluralité de paires de points d'échantillon est obtenue en calculant un contexte de forme de chaque point d'échantillon, dans lequel le contexte de forme est défini par une distribution basée sur la distance-angle de chaque point d'échantillon par rapport à d'autres points d'échantillon, et également pour ajouter les contextes de forme des points d'échantillon de la pluralité de paires de points d'échantillon pour calculer un histogramme de forme cumulatif, dans lequel les compartiments de l'histogramme de forme cumulatif représentent un décompte de la pluralité de paires de points d'échantillon ;

pour concaténer les histogrammes de forme 2D pour une ou plusieurs séquences de données en série temporelle, dérivées de la pluralité de capteurs positionnés sur le véhicule, sur la base des informations d'horodatage pour générer un histogramme de forme concaténé, dans lequel l'histogramme de forme concaténé est généré par conversion de la matrice de distance (D) et de la matrice d'angle (A) en vecteurs unidimensionnels et fusion des vecteurs unidimensionnels (1D), dans lequel l'histogramme de forme concaténé pour la ou les séquences de données en série temporelle comporte des caractéristiques discriminantes des histogrammes de forme 2D pour la ou les séquences de données en série temporelle et améliore la précision de la détection de l'événement lié au véhicule ; et

pour mettre en correspondance l'histogramme de forme concaténé avec un ensemble pré-stocké d'histogrammes de forme pour détecter l'événement à l'aide d'un noyau de fonction de base radiale (RBF) avec un classificateur de machine à vecteurs de support (SVM), dans lequel l'ensemble pré-stocké d'histogrammes de forme comprend des histogrammes de forme correspondant à un événement pertinent.

**FIGURE 1a**

**(PRIOR ART)**

**FIGURE 1b**

**(PRIOR ART)**

200

SYSTEM (202)

NETWORK

(206)

204 - 1        204 - 2        204 - 3        204 - N

**FIGURE 2**

SYSTEM (202)

PROCESSOR(S) (302)

INTERFACE(S) (304)

MEMORY (306)

MODULES (308)

PAIRING MODULE (310)

MATRIX COMPUTING MODULE (312)

HISTOGRAM GENERATING AND EVENT DETERMINING (HGED) MODULE (314)

OTHER MODULES (316)

DATA (318)

OTHER DATA (322)

FIGURE 3

**FIGURE 4a**

**FIGURE 4b**

**FIGURE 4c**

**FIGURE 5**

FIGURE 6a

FIGURE 6b

**FIGURE 7a**

**FIGURE 7b**

800

802
Time-series data sequences related to an event are received

804
Time-series data sequences are sampled

806
Pairs of sample points are generated

808
Distance matrix and angle matrix are computed

810
2D shape histogram for the time-series data sequences are generated

812
2D shape histogram for the time-series data sequences are concatenated

814
Concatenated shape histogram is matched with a pre-stored set of histograms for determining the event

**FIGURE 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2074MUM2014

- US 2014111647 A1